# EUROPEAN PATENT SPECIFICATION

(11) **EP 1 628 079 B1**
(45) Date of publication and mention of the grant of the patent: **21.03.2007**
(21) Application number: 05255117.3
(22) Date of filing: 18.08.2005
(51) Int. Cl.: F24C 15/34, A21B 3/04, A47J 27/04, A47J 39/00

(54) **Overheat steam cooker**
Kocher mit überhitztem Dampf
Cuiseur à vapeur surchauffée

(30) Priority: 19.08.2004 KR 2004065568
(43) Date of publication of application: 22.02.2006
(73) Proprietor: Samsung Electronics Co., Ltd., Suwon-si, Gyeonggi-Do (KR)
(72) Inventor: Kobayashi, Shozo, Yeongtong-gu, Suwon-si, Gyeonggi-do (KR)
(74) Representative: Waddington, Richard

(56) References cited:
- EP-A- 0 691 513
- EP-A- 0 694 741
- US-A- 4 173 215
- US-A- 4 924 072
- US-A- 5 158 064
- US-A- 5 442 161
- US-A- 5 649 476

## Description

An apparatus consistent with the present invention relates to an overheat steam cooker and, more particularly, to an overheat steam cooker equipped with an overheated steam generator and a water supplying device supplying water to the overheated steam generator.

Generally, an over-heat steam cooker is a device capable of cooking foods with the use of overheated steam, having an excellent thermal conductivity. With the over-heat steam cooker, cooking can be carried out in various ways: that is, through baking, boiling, thawing and the like. In using the over-heat steam cooker, foods can be cooked with little oxygen within the cooking chamber, causing no oxidization, and thus, the food cooked is excellent in taste.

As a conventional cooker using overheated steam, an overheat steam cooker is disclosed in Japanese Unexamined Patent Publication No. 2000-184964. This conventional over-heat steam cooker comprises a heating housing, a door opening and closing an opening part through which the foodstuff is accommodated in the heating housing, a heating means heating the wall of the heating housing, a heating housing temperature measuring means measuring a temperature inside of the heating housing, an intra-housing temperature displaying means displaying a temperature inside of the heating housing, a heating housing wall temperature measuring means measuring the temperature of the wall of the heating housing, an overheated steam generating means generating overheated steam to inject to the heating housing, a cooking control means controlling the overheated steam generating means and a water tank supplying water to the overheated steam generating means.

A further steam cooker is disclosed in document EP-0691513.

The overheated steam generating means has a heating means heating water and steam, an inverter circuit driving the heating means, a flow rate control means controlling the flow rate of water to the heating means, a power control means controlling the power of the heating means and an overheated steam temperature measuring means measuring the temperature of generated steam.

With this configuration, the conventional overheat steam cooker can heat and cook the food without evaporating water therein with the use of overheated steam, making the cooked food excellent in taste. Especially, the overheat steam cooker is generally for household use, for which it can be convenient to use.

However, the conventional overheat steam cooker is equipped with a separate water tank to supply water to the overheated steam generating means, thereby increasing the whole volume of the cooker.

In addition, the conventional overheat steam cooker uses such an inverter circuit as a heating means of the overheated steam generating means, thereby making the cooker complicated in structure and increasing the production cost.

It is an object of the present invention to address the above disadvantages and other disadvantages not described above. Also, the present invention is not required to overcome the disadvantages described above, and an illustrative, non-limiting embodiment of the present invention may not overcome any of the problems described above.

The present invention provides an overheat steam cooker decreased in its entire volume.

The present invention provides an overheat steam cooker having a simple configuration and production costs reduced.

According to one aspect of the present invention there is provided an overheat steam cooker, comprising a cooker cabinet having a heating housing forming therein an accommodating space to accommodate foods therein; an overheated steam generator generating overheated steam to be supplied into the heating housing; a water supplying device including a water injecting part provided to the cooker cabinet, through which water is injected, and a water supplying pipe provided between the water injecting part and the overheated steam generator, supplying the water injected from the water injecting part to the overheated steam generator; an exhaust device including an exhaust pipe, discharging the steam supplied to the heating housing; and an exhaust circulating device including an exhaust circulating pipe provided so as to supply the steam discharged to the exhaust pipe to the overheated steam generator, and a flow selection part provided between the exhaust pipe and the exhaust circulating pipe, selectively discharging the steam discharged to the exhaust pipe to the outside or guiding it to the exhaust circulating pipe.

The water injecting part preferably comprises a water injection opening part provided to the cooker cabinet, a water supplying door for opening and closing the water injection opening part, and a water guiding part provided in a back of the water supplying door, guiding the water injected through the water injection opening part to the water supplying pipe.

Preferably, the water supplying device further comprises a water bottle for supplying water to the water injecting part, the water bottle including a water bottle cap mounted thereon and having an opening and closing valve to supply or cut off water to the water injecting part.

Preferably, the water bottle has the capacity of about 500ml.

Preferably, the water supplying device further comprises a water supplying pump for supplying the water injected to the water injecting part to the overheated steam generator.

Preferably, the overheated steam generator comprises a first heating part for heating the water supplied from the water supplying device to thereby generate steam, and a second heating part for heating the steam generated by the first heating part to thereby generate overheated steam.

Preferably, the first heating part is provided below the second heating part, and at least one of the first heating part and the second heating part includes a sheath heater.

Preferably, the overheated steam generator comprises a generator internal casing forming therein an accommodating space to accommodate the first heating part and the second heating part, and a generator external casing spacedly disposed so as to form a generator vacuum insulation layer between it and the generator internal casing.

Preferably, at least one generator radiation shield member is provided on the generator vacuum insulation layer of the overheated steam generator to thereby prevent the heat transmitted to the generator internal casing from being radiated to the generator external casing.

Preferably, the heating housing includes an internal casing forming therein an accommodating space in which foods are accommodated, an external casing spacedly disposed outside the internal casing, and a vacuum insulation layer between the internal casing and the external casing.

Preferably, at least one radiation shield member is provided on the vacuum insulation layer of the heating housing, thereby preventing the heat transmitted to the internal casing from being radiated to the external casing.

Preferably, the cooker further comprises at least one of an intra-housing temperature sensor for measuring the internal temperature of the heating housing and an exhaust temperature sensor for measuring the internal temperature of the exhaust pipe, and a control part for controlling at least one of the temperatures of the flow selection part and the heating housing, based on the temperature detected from at least one of the intra-housing temperature sensor and the exhaust temperature sensor.

Preferably, the exhaust pipe and the exhaust circulating pipe each includes an external pipe through which the steam discharged from the heating housing may pass, and an external pipe spacedly disposed so as to allow a pipe vacuum insulation layer to be formed between it and the internal pipe.

Preferably, the exhaust device further includes an exhaust heat exchange part connected to the exhaust pipe, for cooling the steam discharged through the exhaust pipe to the outside.

Preferably, the heating housing is provided with at least one heater for heating.

Preferably, a steam cover to disperse the steam supplied by the overheated steam generator is provided inside the heating housing.

Preferably, at least one of the exhaust device and the exhaust circulating device, and the overheated steam generator is provided with a filtering material to filter the steam discharged from the heating housing.

For a better understanding of the invention, and to show how embodiments of the same may be carried into effect, reference will now be made, by way of example, to the accompanying diagrammatic drawings in which:
FIG. 1 is a perspective view of an overheat steam cooker consistent with the present invention;
FIG. 2 is an exploded perspective view of the overheat steam cooker consistent with the present invention;
FIG. 3 is a sectional view taken along line III-III of the overheat steam cooker as illustrated in FIG. 1;
FIG. 4 is a sectional view taken along line IV-IV of a heating housing of the overheat steam cooker illustrated in FIG. 3;
FIG. 5 is a sectional view taken along line V-V of an overheated steam generator of the overheat steam cooker as illustrated in FIG. 3;
FIGS. 6 and 7 are sectional views illustrating operations of a water supplying device of the overheat steam cooker consistent with the present invention; and
FIGS. 8 and 9 are sectional views illustrating operations of a water bottle of the overheat steam cooker consistent with the present invention.

Hereinafter, an exemplary embodiment of the present invention will be described with reference to the accompanying drawings.

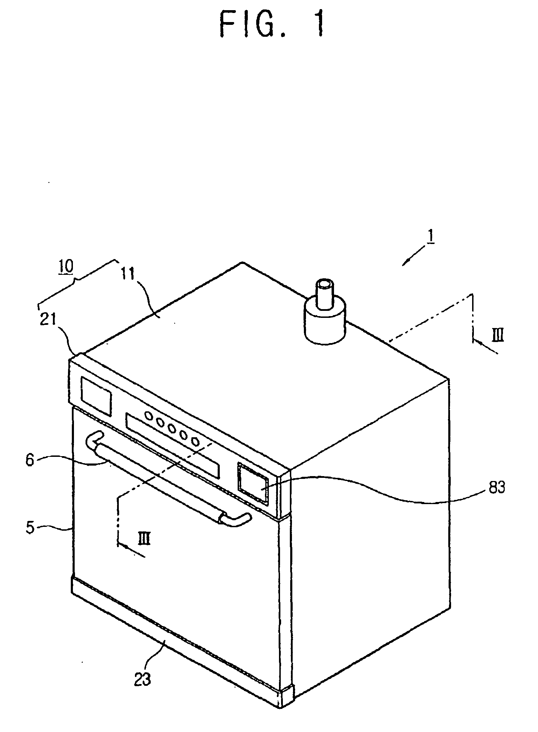

As illustrated in FIGS. 1 to 3, an overheat steam cooker consistent with the present invention comprises a cooker cabinet having a heating housing 31 forming therein an accommodation space to accommodate such items as foods therein, an overheated steam generator 50 generating overheated steam to be supplied into the heating housing 31, a water supplying device 80 provided to the cooker cabinet 10, supplying water to the overheated steam generator 50, an exhausting device having an exhaust pipe 61 to discharge therethrough the steam supplied to the heating housing 31, and an exhaust circulating device 70 supplying the steam discharged to the exhaust pipe to the overheated steam generator 50. The overheat steam cooker 1 further comprises a filtering material 65 provided on at least one of the exhausting device 60 and the exhaust circulating device 70, filtering the steam discharged from the heating housing 31. The overheat steam cooker 1 further comprises at least one of an intra-housing temperature sensor 47 measuring the internal temperature of the heating housing 31 and an exhaust temperature sensor (not shown) measuring the internal structure of the exhaust pipe 61, and also may further comprise a control part (not shown) controlling at least one of the temperatures of a flow selection part 73 of the exhaust circulating device 70 to be described later and the heating housing 31, based on the signal detected by at least one of the intra-housing temperature sensor 47 and the exhaust temperature sensor (not shown).

The cooker cabinet 10 comprises a cabinet cover 11 provided to cover the top, the sides and the back of the heating housing 31, a front frame 13 provided in front of the heating housing 31, a base frame 12 provided in the lower side of the heating housing 31, supporting the heating housing 31 and others, and a control panel 21 provided in the upper front side of the front frame 13, controlling the overheat steam cooker 1. A door 5 having a handle 6 is provided in front of the front frame 10, opening and closing a door opening part 14 of the front frame 13 to be described later.

The front frame 13 is provided with the door opening part 14 through which foods are accommodated in the heating housing 31, and a door shield member 15 manufactured with rubber or resin materials, to maintain an airtightness with and closely coupled to the door 5 when the door opening part 14 is closed, and mounted on the door opening part 14. The front frame 13 is further provided with a heating housing exhaust port 17 penetrated so as to communicate with the heating housing, thereby discharging the steam inside the heating housing 31, an exhaust pipe coupling port 18 penetrated so as to communicate with the exhaust pipe 61, and an exhaust duct 19 coupled to the heating housing exhaust port 17 and the exhaust pipe coupling port 18, guiding the steam discharged from the heating housing exhaust port 17 to the exhaust pipe coupling port 18. On the front frame 13 is mounted an intra-housing temperature sensor 47 measuring the internal temperature of an internal casing 32 of the heating housing 31 to be described later and is provided a penetrating part 16 within which to accommodate the water injecting part 81 of the water supplying device 80 to be described later. On the lower side of the door 5 is provided a lower cover 23 to prevent the lower space of the front frame 13 from being exposed.

The exhaust duct 19 is detachably coupled to the front frame 13 by use of screws 24, thereby guiding the steam discharged from the heating housing exhaust port 17 to the exhaust pipe coupling port 18.

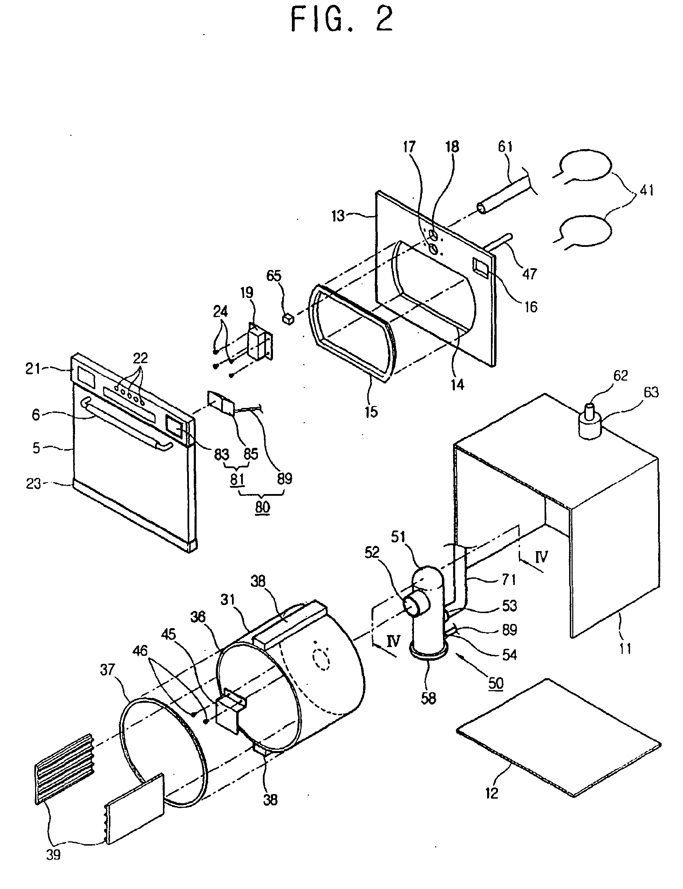

On the control panel 21 are provided a plurality of buttons 22 (see FIG. 2) including a power button for turning on or off the overheat steam cooker 1 and a water injecting part 81 of the water supplying device 80 to be described later, supplying water to the overheated steam generator 50. The control panel 21 may be provided with a water shortage indicating part (not shown) indicating shortage of water to the overheated steam generator 50. Accordingly, a user ascertains the water shortage indicating part (not shown) and then can supply the water through the water supplying device 80.

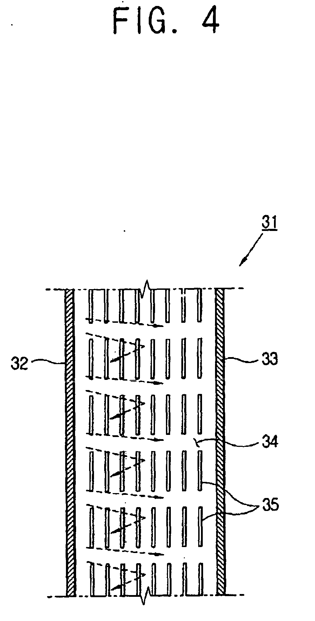

The heating housing 31, as illustrated in FIG. 4, comprises an internal casing 32 forming therein an accommodating space to accommodate foods therein, and an external casing 33 spacedly disposed outside the internal casing 32, between which a vacuum insulation layer 34 is formed. The heating housing 31 is cylindrical, as illustrated in FIG. 2, and comprises a heating housing opening part 36 opened forwardly through which trays (not shown) for putting foods thereon are accommodated, a heating housing shield member 37 manufactured with rubber or resin materials so as to maintain an airtightness with and be closely coupled to the front frame 13, being mounted on the heating housing opening part 36, and a support frame 38 supportedly coupled to the outside of the external casing 33 and the front frame 13, thereby allowing the heating housing 31 to be coupled to the front frame 13. On the heating housing 31 is mounted a heater for heating the heating housing 31 to the predetermined degree of temperature.

Inside the internal casing 32 is provided a wire rack 39 formed with multiple layers so as to put containers such as trays (not shown) thereon. The wire rack 39 is provided in pairs, each one pair of which are respectively in the left and the right. The internal casing 32 is provided with a steam cover 45 dispersing the steam discharged from the steam discharging part 52 of the overheated steam generator 50 so as to prevent the steam from directly contacting the foods.

The steam cover 45 is separately installed in the transverse direction to the steam discharging direction, corresponding to a steam discharging part 52 of the overheated steam generator 50 (to be described later) provided in the rear space of the internal casing 32. The steam cover 45 may be coupled to the inside rear space of the internal casing 32 by use of screws 46. Accordingly, the steam discharged from the steam discharging part 52 is first collided with the steam cover 45, thereby preventing the discharged steam excessively heating foods close to the steam discharging part 52 due to direct contact of the discharged steam with the foods. In addition, since the steam that collides with the steam cover 45 turns back to both sides of or the lower side of the steam cover 45 and is dispersed over the whole inside of the heating housing 31, the foods accommodated in the heating housing 31 are evenly heated.

The heating housing shield member 37 is closely coupled to the front ends of the internal casing 32 and the external casing 33 so as to allow a space between the internal casing 32 and the external casing 33 to be maintained almost in a vacuum. Front ends of the internal casing 32 and the external casing 33 may be joined by use of a caulking method. And, the internal casing 32 and the external casing 33 may be made with metal materials having a strong thermal resistance. Accordingly, heat transmission due to conduction and convection from the internal casing 32 to the external casing 33 may be suppressed owing to the vacuum insulation layer 34, thereby enhancing the thermal efficiency.

On the vacuum insulation layer 34 may be provided a radiation shield member 35 excluding the heat transmitted to the internal casing 32 from being radiated to the external casing 33.

The radiation shield member 35 is disposed substantially in parallel with the planes of the internal casing 32 and the external casing 33, between the internal casing 32 and the external casing 33. The radiation shield member 35 may be provided in multiple layers, which are separated one another. The radiation shield member 35 formed with multiple layers is supported by a support stand (not shown) coupled in the transverse direction to the planes of the internal casing 32 and the external casing 33 and may be installed separately from one another. However, one side of the radiation shield member 35 may be coupled to at least one of the internal casing 32 and the external casing 33 and then disposed on the vacuum insulation layer 34. The radiation shield member 35 may be made with metal materials such as aluminum so as to allow the heat radiated from the internal casing to be reflected toward the internal casing 32, but may be made with non-metallic materials so as to allow the heat radiated from the internal casing 32 to be reflected toward the internal casing 32. Accordingly, by providing the radiation shield member 35 in the vacuum insulation layer 34, heat transmission from the internal casing 32 to the external casing 33 due to radiation as well as conduction and convection may be prevented, thereby further improving the thermal efficiency.

The heater 41 heats the heating housing 31 to the predetermined degree of temperature and plays a role of preventing dew condensation of the steam supplied into the heating housing 31. A pair of the heaters 41 may be provided, with the heaters being respectively displaced on the upper side and the lower side of the internal casing 32. The heater 41 is supportedly coupled to the front fame 13 and then displaced in the internal casing 32. The heater 41 may employ a sheath heater elongated or bent like a circle or other kinds of heaters.

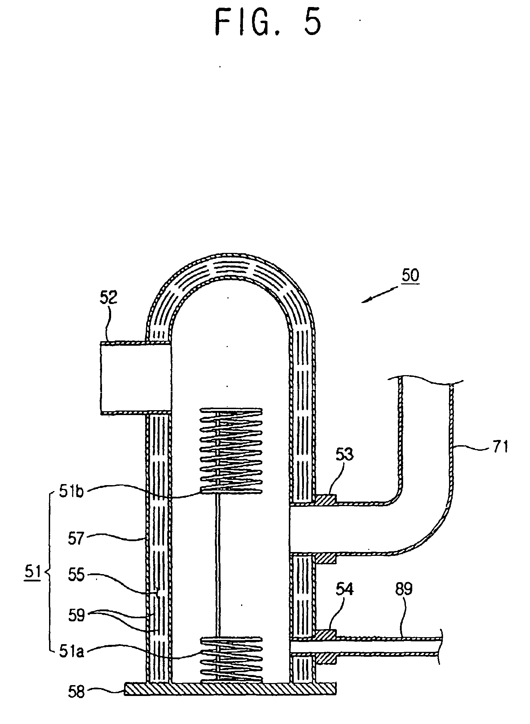

The overheated steam generator 50, as illustrated in FIG. 5, comprises a first heating part 51a for heating the water supplied from the water supplying device 80 to generate steam, and a second heating part 51b for heating the steam generated by the first heating part 51a to generate overheated steam. The overheated steam generator 50 comprises a generator body 51 having the first heating part 51a and the second heating part 51b, to generate overheated steam, a generator support stand 58 coupling the generator body 51 to the base frame 12 of the cooker cabinet 10, a steam discharging part 52 connected to the generator body 51 and the heating housing 31, discharging the overheated steam to the heating housing 31, an exhaust absorbing part 53 connected to an exhaust circulating pipe 71 of an exhaust circulating device 70 to be described later, and a water absorbing part 54 connected to the water injecting part 81 through the water supplying pipe 89, absorbing the water.

The generator body 51 is further provided with a generator internal casing 55 forming therein an internal space to accommodate the first and the second heating parts 51a and 51b therein to thereby generate overheated steam, and a generator external casing 57 spacedly disposed to form a generator vacuum insulation layer 56 between it and the generator internal casing 55. The generator body 51 may be further provided with a water level sensor (not shown) to adjust the amount of water, and a water level control valve (not shown) mounted on the water absorbing part 53, opening or closing water supply by the water level sensor (not shown).

The first heating part 51a is provided at the lower side of the second heating part 51b, and may be laid under the water supplied from the water supplying device 80. Preferably, but not necessarily, the first heating part 51a and the second heating part 51b each comprises a sheath heater bent in the shape of a coil. However, at least one of the first heating part 51a and the second heating part 51b may be a different kind of heater.

The second heating part 51b is provided at the upper side of the first heating part 51a so that the second heating part 51b is not laid under the water supplied from the water supplying device 80. The second heating part 51b is heated to a high temperature so as to heat the steam generated by the first heating part 51a to thereby generate overheated steam. Accordingly, the overheated steam generated by passing through the second heating part 51b is supplied inside the heating housing 31 through a steam discharging part 52.

The generator internal casing 55 and the generator external casing 57 may be provided like a cylinder, but is not limited to that shape and may be shaped like a rectangle container or other polygonal container. With this configuration, heat transmission from the generator internal casing 55 to the generator external casing 57 due to conduction and convection may be prevented owing to the generator vacuum insulation layer 56, thereby further improving the thermal efficiency of the overheated steam generator 50.

The generator vacuum insulation layer 56 may be provided with a generator radiation shield member 59 so as to prevent the heat transmitted to the generator internal casing 55 from being radiated to the generator external casing 57.

The generator radiation shield member 59 is disposed in parallel with the generator internal casing 55 and the generator external casing 57 between them. The generator radiation shield member 59 may be provided in plural layers, which are separated one another in the radiation direction. Mounting and material of the generator radiation shield member 59 are similar to those of the radiation shield member 35 described above, and thus, detailed description of the generator radiation shield member 59 will be omitted. However, since the temperature requirement of the overheated steam generator 50 may be different from that of the heating housing 31, the generator vacuum insulation layer 56 may be provided with a different degree of vacuum pressure from the vacuum insulator layer 34 of the heating housing 31, and the generator radiation shield member 59 may be made with different kinds of materials from the radiation shield member 35 of the heating housing 31. Under this configuration, by providing the generator radiation shield member 59 in the generator vacuum insulation layer 56, heat transmission from the generator internal casing 55 to the generator external casing 57 due to radiation as well as conduction and convection may be prevented, thereby further improving the thermal efficiency.

The exhausting device 60 discharges the steam discharged from the heating housing 31 to the outside. The exhausting device 60 comprises an exhaust pipe 61 and an external duct 62 guiding the steam discharged from the exhaust pipe to the outside. The exhausting device 60 may further comprise an exhaust heat exchanging part 63 connected to the exhaust pipe 61, cooling the steam discharged to the outside through the exhaust pipe 61.

The exhaust heat exchanging part 63 is provided between the exhaust pipe and the external duct 62, cooling the steam of high temperature discharged to the outside from the exhaust pipe 61 and discharging it to the outside. The exhaust heat exchanging part 63 may be provided so as to be exposed to the outside of a cabinet cover 11 as illustrated in FIGS. 1 to 3, but may also be provided so as to be accommodated inside the cabinet cover 11. With this configuration, an increase in surface temperature of the external duct due to the steam discharged through the exhaust heat exchanging part 63 may be prevented.

One side of the exhaust pipe 61 is coupled to the exhaust pipe coupling port 18 of the front frame 13 and the other side thereof is coupled to the exhaust heat exchanging part 63. Between the exhaust pipe 61 and the exhaust heat exchanging part 63 is provided a flow selection part 73 of the exhaust circulating device 70 to be described later. The exhaust pipe 61 comprises an internal pipe (not shown) through which the steam discharged from the heating housing 31 passes, and an external pipe (not shown) provided outside the internal pipe (not shown), spacedly disposed so as to form a pipe vacuum insulation layer (not shown) between the internal pipe (not shown) and the external pipe (not shown). The pipe vacuum insulation layer (not shown) may be provided with at least one pipe radiation shield member (not shown) to prevent the heat transmitted to the internal pipe (not shown) from being radiated to the external pipe (not shown). Accordingly, the exhaust pipe 61 can enhance the thermal efficiency owing to the pipe vacuum insulation layer (not shown). Further, by providing the pipe radiation shield member (not shown) in the pipe vacuum insulation layer (not shown), heat transmission due to radiation may be prevented, enhancing the thermal efficiency much more.

The exhaust circulating device 70 comprises an exhaust circulating pipe 71 provided so as to supply the steam discharged to the exhaust pipe 61 to the overheated steam generator 50, and a flow selection part 73 provided between the exhaust pipe 61 and the exhaust heat exchanging part 71 to selectively discharge the steam discharged to the exhaust pipe 61 to the outside or guide it to the exhaust circulating pipe 71. The exhaust circulating device 70 returns the steam discharged from the heating housing 31 back to the overheated steam generator 50, thereby enhancing the energy efficiency and reducing considerably the amount of water consumed in the overheated steam generator 50.

The flow selection part 73 is provided between the exhaust pipe 61 and the exhaust circulating pipe 71, and the exhaust heat exchanging part 63, thereby selectively discharging the steam discharged from the exhaust pipe 61 to at least one of the exhaust circulating pipe 71 and the exhaust heat exchanging part 63. The flow selection part 73 is provided as a belt-type and may be controlled by a control part (not shown) or by a user.

One side of the exhaust circulating pipe 71 is coupled to the flow selection part 73 and the other side thereof is coupled to the exhaust absorbing part 53 of the overheated steam generator 50. Like the exhaust pipe 61, the exhaust circulating pipe 71 may also be provided with a pipe vacuum insulation layer (not shown) and at least one pipe radiation shield member (not shown) may be provided in the pipe vacuum insulation layer (not shown). Accordingly, the thermal efficiency of the exhaust circulating pipe 71 may be enhanced.

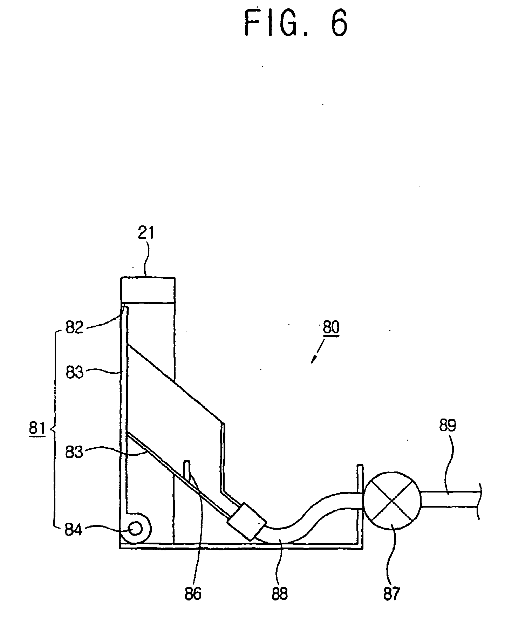

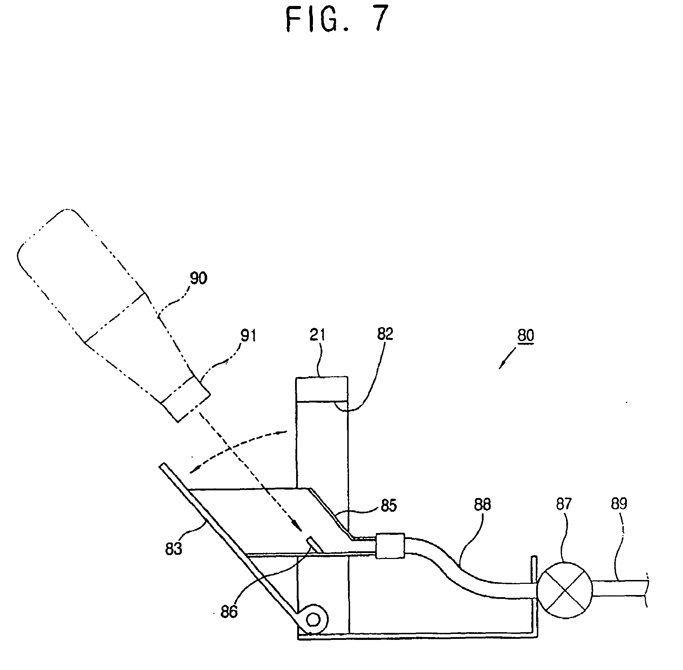

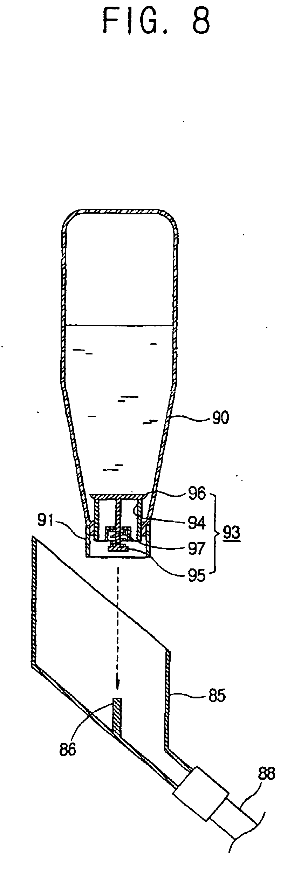

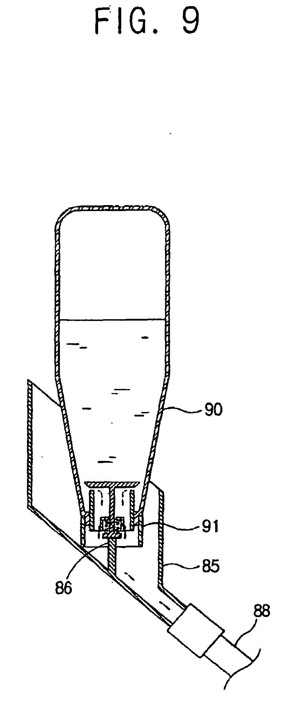

As illustrated in FIGS. 6 through 9, the water supplying device 80 comprises a water injecting part 81 provided to the cooker cabinet 10, through which water is injected, and a water supplying pipe 89 provided between the water injecting part 81 and the overheated steam generator 60, supplying the water supplied from the water injecting part 81 to the overheated steam generator 50. The water supplying device 80 may further comprise a water supplying pump 87 supplying the water injected to the water injecting part 81 to the overheated steam generator 50 and a water bottle 90 supplying the water to the water injecting part 81.

The water injecting part 81 may comprise a water injection opening part 82 provided to the cooker cabinet 10, a water supplying door 83 opening and closing the water injection opening part 82, and a water guiding part 85 guiding the water injected through the water injecting part 82 to the water supplying pipe 89. Between the water injection opening part 82 and the water supplying door 83 is provided a hinge part 84 allowing the water supplying door 83 to be rotated forwardly and backwardly to thereby open and close the water injection opening part 82. The water injecting part 81 may be provided with a projection contacting part 86, allowing the water bottle 90 to be contacted with an opening and closing valve 93 of a bottle cap 91 to be described later, when the water bottle 90 is inserted into the water injecting part 81.

The water injection opening part 82 is formed to penetrate the control panel 21, and it is preferably sized so as to accommodate therein a part of the water bottle 90.

The water guiding part 85 accommodates a part of the water bottle 90, being formed with an accommodating space whose upper side is opened so as to accommodate the water discharged from the water bottle 90. One side of the water guiding part 85 is coupled to the water supplying door 83 and it is opened to accommodate the water bottle 90 when the water supplying door 83 is opened. The other side of the water guiding part 85 is connected to the water supplying pipe 26, thereby supplying the water to the overheated steam generator 50. Between the water guiding part 85 and the water supplying pipe 26 may be provided a flexible pipe 88, thereby allowing the water guiding part 85 to be flexibly connected to the water supplying pipe 26 when the water guiding part 85 is integrally rotated with the water supplying door 83. The water guiding part 85 may be provided with a weight sensor (not shown) to close the opening and closing valve 93 of the water bottle cap 91 to be described later, when the weight of the water bottle 90 accommodated in the water guiding part 85 is sensed to be less or than the predetermined weight.

The projection contacting part 86 is provided inside the water guiding part 85 so as to press a projection 95 provided on the opening and closing valve 93 of the water bottle cap 91 to be described later.

The water supplying pump 87 is provided between the water guiding part 85 and the water supplying pipe 89, allowing the water injected into the water guiding part 85 to be supplied to the water supplying pipe 89.

The water bottle 90 comprises the water bottle cap 91 on which the opening and closing valve 93 to supply water or not to supply the water is mounted. The water bottle 90 may be provided as a PET bottle to accommodate water therein. Preferably, but not necessarily, the water bottle 50 has a capacity of around 500ml. This capacity of water is substantially similar to the amount of water to be supplied into the overheated steam generator 50. However, the water capacity can be much or less than 500ml.

The water bottle cap 91 may be detachably coupled to the water bottle 90. Namely, the water bottle cap 91 may be rotated so as to be coupled to the water bottle 90.

The opening and closing valve 93 comprises a water discharging port 94 provided by penetrating the water bottle cap 91 through which the water accommodated in the water bottle 90 is discharged, a valve body 96 opening and closing one side end of the water discharging port 94, a projection part 95, one side of which is connected to the valve body 96 and the other side of which is provided so as to be contacted with the projection contacting part 86 of the water guiding part 85, and an elastic member 97 constantly pressing the projection part 95, thereby allowing the valve body 96 to close the water discharging port 94. Accordingly, when the projection part 95 pressed by the projection contacting part 86 is moved as it overcomes the elasticity from the elastic member 97, the valve body 96 opens the water discharging port 94, thereby allowing the water accommodated in the water bottle 90 to be discharged. The projection 95 is moved by the elastic member 97 when it is detached from the projection contacting part 86, thereby allowing the valve body 96 to close the water discharging port 94. And, when the water guiding part 85 is filled with water and the water level is higher than the water discharging port 94 of the opening and closing valve 93, air is preventd from being inserted into the water bottle 90 through the water discharging port 94 and thus the water is preventd from being discharged through the water discharging port 94.

Accordingly, if the water bottle 90 is inserted into the water guiding part 85 to supply water after rotating the water supplying door 83 forwardly to open it, the water can be supplied to the overheated steam generator 50 through the water supplying pipe 89.

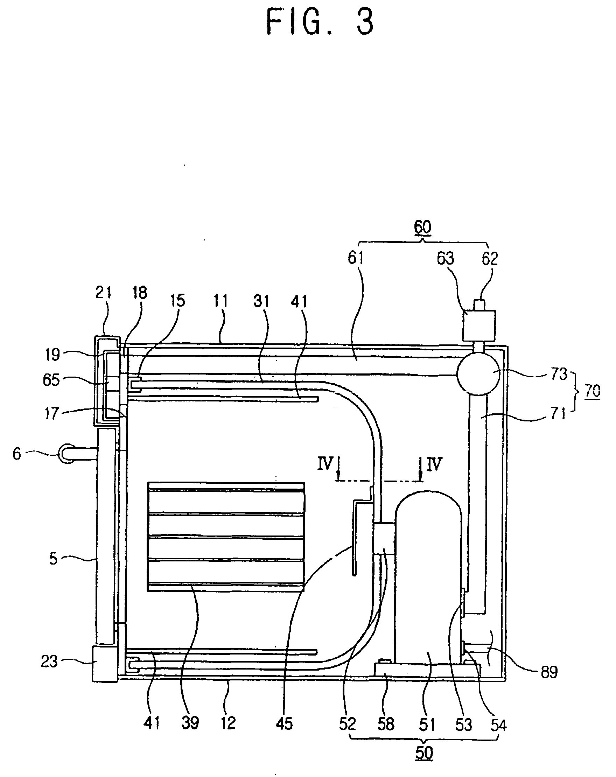

The filtering material 65 (see FIGs. 2 and 3) is disposed on a discharging path of the steam so as to filter oil, dust and bad smell contained in the steam discharged from the heating housing 31. The filtering material 65 may be accommodated inside the exhaust duct 19 to thereby filter the steam passing through the exhaust duct 19, and it can be replaced with a new one by disassembling the exhaust duct 19 from the front frame 13. However, the filtering material 65 may be provided in the exhaust pipe 61 or the heating housing discharging port 17 so as to filter the steam discharged from the heating housing 31. And the filtering material 65 may also be provided in the steam discharging part 52 of the overheated steam generator 50, to thereby filter the steam supplied into the heating housing 31.

A control part (not shown) can control the temperatures of the flow selection part 73 and the heating housing 31 based on the signals detected from an intra-housing temperature sensor 47 and an exhaust temperature sensor (not shown). For example, the control part (not shown) activates at least one of the heater 41 or the overheated steam generator 50 based on the signal detected from the intra-housing temperature sensor 47, thereby maintaining the temperature of the heating housing 31 within the predetermined range of temperature. Also the control part (not shown) may control the flow selection part 73 when the temperature detected from the exhaust temperature sensor (not shown) is higher than the predetermined degree of temperature, so as to allow the steam passing through the exhaust pipe 61 to be moved to the exhaust circulating pipe 71. When the temperature detected from the exhaust temperature sensor (not shown) is lower than the predetermined degree of temperature, the control part (not shown) activates the flow selection part 73 so as to allow the steam passing through the exhaust pipe 61 to be moved to the exhaust heat exchange part 63.

With this configuration, an operation of the overheat steam cooker 1 according to the present invention will be described.

First, the food to be cooked is accommodated inside the heating housing 31 and power is supplied to the overheat steam cooker 1. The heater 41 is heated to thereby increase the temperature of the heating housing 31, and overheated steam is generated from the overheated steam generator 50 and then delivered into the heating housing 31. The food is then cooked with the overheated steam. The steam within the heating housing 31 may be discharged to the exhaust heat exchange part 63 through the exhaust pipe 61, or may be returned again to the overheated steam generator 50 through the exhaust circulating pipe 71, which can be reused. Further, when it is ascertained through the control panel 21 that water in the overheated steam generator 50 is not sufficient, the water insufficiency can be solved by supplying the water to the overheated steam generator 50 through the water supplying device 80.

As described above, the overheat steam cooker according to the present invention is provided with an exhaust circulating device, with which the steam discharged from the heating housing is returned back to the overheated steam generator, thereby increasing the energy efficiency. Also, since the amount of water consumed in the overheated steam generator can be considerably reduced, there is no need to mount a separate water tank where a large amount of water is consumed, thereby decreasing the whole volume of the overheat steam cooker.

In the overheated steam cooker according to the present invention, the first heating part and the second heating part provided in the overheated steam generator may comprise a sheath heater and the like, thereby simplifying the structure and reducing the production cost.

In addition, the overheat steam cooker according to the present invention is provided with a vacuum insulation layer between the heating housing and the internal and the external casings of the overheated steam generator, and thus, heat transmission from the internal casing to the external casing can be suppressed, thereby enhancing the thermal efficiency. Further by providing a radiation shield member on the vacuum insulation layer, heat transmission from the internal casing to the external casing due to radiation may be prevented, thereby further improving the thermal efficiency.

Moreover, the overheat steam cooker according to the present invention is provided with a filtering material, thereby filtering the steam discharged from the heating housing.

Although a few preferred embodiments have been shown and described, it will be appreciated by those skilled in the art that various changes and modifications might be made without departing from the scope of the invention, as defined in the appended claims.

## Claims

1. An overheat steam cooker, comprising:
a cooker cabinet having a heating housing (31) forming therein an accommodating space to accommodate foods therein;
an overheated steam generator (50) which is operable to generate overheated steam to be supplied into the heating housing (31);
a water supplying device (80) including a water injecting part (81) provided to the cooker cabinet, through which water is injectable, and a water supplying pipe (89) provided between the water injecting part (81) and the overheated steam generator (50) and which is operable to supply the water injected from the water injecting part (81) to the overheated steam generator (50);
an exhaust device (60) including an exhaust pipe (61), for discharging the steam supplied to the heating housing (31); **characterised by** :
an exhaust circulating device (70) including an exhaust circulating pipe (71) provided so as to be operable to supply the steam discharged to the exhaust pipe (61) to the overheated steam generator (50), and a flow selection part (73) provided between the exhaust pipe (61) and the exhaust circulating pipe (71), for selectively discharging the steam discharged to the exhaust pipe (61) to the outside or guiding it to the exhaust circulating pipe (71).

2. The cooker according to claim 1, wherein the water injecting part (81) comprises a water injection opening part (82) provided to the cooker cabinet, a water supplying door (83) for opening and closing the water injection opening part (82), and a water guiding part (85) provided in a back of the water supplying door (83), guiding the water injected through the water injection opening part (82) to the water supplying pipe (89).

3. The cooker according to claim 1 or claim 2, wherein the water supplying device (80) further comprises a water bottle (90) for supplying water to the water injecting part (81), and
the water bottle (90) including a water bottle cap (91) having mounted thereon an opening and closing valve (93) to supply or cut off water to the water injecting part (81).

4. The cooker according to claim 3, wherein the water bottle (90) has a capacity of about 500ml.

5. The cooker according to any preceding claim, wherein the water supplying device (80) further comprises a water supplying pump (87) for supplying the water injected to the water injecting part (81) to the overheated steam generator (50).

6. The cooker according to any preceding claim, wherein the overheated steam generator (50) comprises a first heating part (51a) for heating the water supplied from the water supplying device (80) to thereby generate steam, and a second heating part (51b) for heating the steam generated by the first heating part (51a) to thereby generate overheated steam.

7. The cooker according to claim 6, wherein the first heating part (51a) is provided below the second heating part (51b), and
at least one of the first heating part (51a) and the second heating part (51b) includes a sheath heater.

8. The cooker according to claim 6 or claim 7, wherein the overheated steam generator (50) comprises a generator internal casing (55) forming therein an accommodating space to accommodate the first heating part (51a) and the second heating part (51b), and a generator external casing (57) spacedly disposed so as to form a generator vacuum insulation layer (56) between it and the generator internal casing (55).

9. The cooker according to claim 7 or claim 8, wherein at least one generator radiation shield member (59) is provided in the generator vacuum insulation layer (56) of the overheated steam generator (50) to thereby prevent the heat transmitted to the generator internal casing (55) from being radiated to the generator external casing (57).

10. The cooker according to claim 6 or claim 7, wherein the heating housing (31) includes an internal casing (55) forming therein an accommodating space in which foods are accommodated, an external casing (57) spacedly disposed outside the internal casing (55), and a vacuum insulation layer (56) between the internal casing (55) and the external casing (57).

11. The cooker according to claim 10, wherein at least one radiation shield member (59) is provided in the vacuum insulation layer (56) of the heating housing (31), thereby being adapted to prevent the heat transmitted to the internal casing (55) from being radiated to the external casing (57).

12. The cooker according to any preceding claim, further comprising:
at least one of an intra-housing temperature sensor (47) for measuring the internal temperature of the heating housing (31) and an exhaust temperature sensor for measuring the internal temperature of the exhaust pipe (61), and
a control part for controlling at least one of the temperatures of the flow selection part (73) and the heating housing (31), based on the temperature detected from at least one of the intra-housing temperature sensor (47) and the exhaust temperature sensor.

13. The cooker according to any preceding claim, wherein the exhaust pipe (61) and the exhaust circulating pipe (71) each include an external pipe through which the steam discharged from the heating housing (31) passes, and an external pipe spacedly disposed so as to allow a pipe vacuum insulation layer to be formed between it and the internal pipe.

14. The cooker according to any preceding claim, wherein the exhaust device (60) further includes an exhaust heat exchange part (63) connected to the exhaust pipe (61), for cooling the steam discharged through the exhaust pipe (61) to the outside.

15. The cooker according to any preceding claim, wherein the heating housing (31) is provided with at least one heater for heating.

16. The cooker according to any preceding claim, wherein a steam cover (45) to disperse the steam supplied by the overheated steam generator (50) is provided inside the heating housing (31).

17. The cooker as claimed in any preceding claim, wherein at least one of the exhaust device (60) and the exhaust circulating device (70), and the overheated steam generator (50) is provided with a filtering material to filter the steam discharged from the heating housing.

## Patentansprüche

1. Mit überhitztem Dampf arbeitende Kochvorrichtung, die umfasst:
einen Kochraum mit einem Heizgehäuse (31), das einen Aufnahmeraum zum Aufnehmen von Lebensmitteln darin aufweist;
eine Einrichtung (50) zum Erzeugen von überhitztem Dampf, die so betrieben werden kann, dass sie überhitzten Dampf erzeugt der in das Heizgehäuse (31) eingeleitet wird;
eine Wasserzuführeinrichtung (80), die einen Wassereinspritzteil (81), der an dem Kochraum vorhanden ist und Ober den Wasser eingespritzt werden kann, sowie ein Wasserzuführrohr (89) enthält, das zwischen dem Wassereinspritzteil (81) und der Einrichtung (50) zum Erzeugen von überhitztem Dampf vorhanden ist und so betrieben werden kann, dass es das über den Wassereinspritztell (81) eingespritzte Wasser der Einrichtung (50) zum Erzeugen von überhitztem Dampf zuführt;
eine Abdampf-Einrichtung (60), die ein Abdampfrohr (61) zum Ablassen des dem Heizgehäuse (31) zugeführten Dampfs enthält ; **gekennzeichnet durch**
eine Abdampf-Umwälzeinrichtung (70), die ein Abdampf-Umwälzrohr (71), das so vorhanden ist, dass es betrieben werden kann, um den an das Abdampfrohr (61) abgelassenen Dampf der Einrichtung (50) zum Erzeugen von überhitzten Dampf zuzuführen, und einen Strom-Auswähltell (73) enthält, der zwischen dem Abdampfrohr (61) und dem Abdampf-Umwälzrohr (71) vorhanden Ist, um den an das Abdampfrohr (61) abgelassenen Dampf selektiv nach außen abzulassen oder ihn zu dem Abdampf-Umwälzrohr (71) zu leiten.

2. Kochvorrichtung nach Anspruch 1, wobei der Wasseteinspritzteil (81) einen Wassereinspritz-Öffnungstell (82), der an dem Kochraum vorhanden ist, eine Wasserzuführklappe (83) zum Öffnen und Schließen des Wassereinspritz-Öffnungsteils (82) und ein Wasserleitteil (85) umfasst, der In einer Rückseite der Wasserzuführklappe (83) vorhanden ist und das über den Wassereinspritz-Öffnungsteil (82) eingespritzte Wasser zu dem Wasserzuführrohr (89) leitet.

3. Kochvorrichtung nach Anspruch 1 oder 2, wobei die Wasserzuführeinnchtung (80) des Weiteren eine Wasserflasche (90) zum Zuführen von Wasser zu dem Wassereinspritzteil (81) umfasst, und
die Wasserflasche (90) eine Wasserflaschenkappe (91) enthält, an der ein Öffnungs- und Schließventil (93) angebracht ist, um dem Wassereinspritzteil (81) Wasser zuzuführen oder die Zufuhr zu unterbrechen.

4. Kochvorrichtung nach Anspruch 3, wobei die Wasserflasche (90) ein Fassungsvermögen von ungefähr 500 ml hat

5. Kochvorrichtung nach einem der vorangehenden Ansprüche, wobei die Wasserzufuhreinnchtung (80) des Weiteren eine Wasserzuführpumpe (87) zum Zuführen des in den Wassereinsprttztell (81) eingespritzten Wassers zu der Einrichtung (50) zum Erzeugen von überhitztem Dampf umfasst.

6. Kochvorrichtung nach einem der vorangehenden Ansprüche, wobei die Einrichtung (50) zum Erzeugen von überhitztem Dampf einen ersten Heizteil (51 a), der das von der Wasserzuführeinrichtung (80) zugeführte Wasser erhitzt, um so Dampf zu erzeugen, und einen zweiten Heizteil (51 b) umfasst, der den durch den ersten Heizteil (51 a) erzeugten Dampf erhitzt, um so überhitzten Dampf zu erzeugen.

7. Kochvorrichtung nach Anspruch 16, wobei der erste Heizteil (51a) unter dem zweiten Heizteil (51b) vorhanden ist, und
wenigstens der erste Heizteil (51a) oder der zweite Heizteil (51 b) einen Mantelheizer enthält.

8. Kochvorrichtung nach Anspruch 6 oder Anspruch 7, wobei die Einrichtung (50) zum Erzeugen von überhitzten Dampf eine innere Verkleidung (55) der Erzeugungseinrichtung, die darin einen Aufnahmeraum zum Aufnehmen des ersten Heizteils (51a) und des zweiten Heizteils (51b) bildet und eine äußere Verkleidung (57) der Erzeugungseinrichtung umfasst, die beabstandet so angeordnet ist, dass sie eine Vakuum-Isolierschicht (56) der Erzeugungseinrichtung zwischen ihr und der inneren Verkleidung (55) der Erzeugungseinrichtung bildet.

9. Kochvorrichtung nach Anspruch 7 oder Anspruch 8, wobei wenigstens ein Strahlungsabschirmelement (59) der Erzeugungseinrichtung In der Erzeugungseinrichtungs-Vakuum-Isolierschicht (56) der Einrichtung (50) zum Erzeugen von überhitztem Dampf vorhanden ist, um so zu verhindern, dass die auf die innere Verkleidung (55) der Erzeugungseinrichtung übertragene Wärme zu der äußeren Verkleidung (57) der Erzeugungseinrichtung gestrahlt wird.

10. Kochvorrichtung nach Anspruch 6 oder nach Anspruch 7, wobei das Heizgehäuse (31) eine innere Verkleidung (55), die darin einen Aufnahmeraum bildet, in dem Lebensmittel aufgenommen werden, eine äußere Verkleidung (57), die beabstandet außerhalb der Inneren Verkleidung (55) angeordnet ist, und eine Vakuum-Isollerschicht (56) zwischen der inneren Verkleidung (55) und der äußeren Verkleidung enthält.

11. Kochvorrichtung nach Anspruch 10, wobei wenigstens ein Strahlungsabschirmelement (59) in der Vakuum-Isolierschicht (56) des Heizgehäuses (31) vorhanden ist, das so eingerichtet ist, dass es verhindert, dass die auf die innere Verkleidung (55) übertragene Warme zu der äußeren Verkleidung (57) gestrahlt wird.

12. Kochvorrichtung nach einem der vorangehenden Ansprüche, die des Weiteren umfasst:
wenigstens einen Gehäuse-innentemporatursensor (47) zum Messen der Innentemperatur das Heizgehäuses (31) und einen Abdampf-Temperatursensor zum Messen der Innentemperatur des Abdampfrohrs (61), und
ein Steuerteil zum Steuern wenigstens einer der Temperaturen des Strömungsauswählteils (73) oder des Helzgehäuses (31) auf Basis der Temperatur, die durch wenigstens den Gehäuse-Innentemperatursensor (47) oder den Abdampf-Temperatursensor erfasst wird.

13. Kochvorrichtung nach einem der vorangehenden Ansprüche, wobei das Abdampfrohr (61) und das Abdampf-Umwälzrohr (71) jeweils ein äußeres Rohr, durch das der aus dem Heizgehause (31) abgelassene Dampf hindurchtritt, sowie ein äußeres Rohr enthalten, das beabstandet so angeordnet ist, dass eine Rohr-Vakuum-Isolierschicht zwischen ihm und dem inneren Rohr ausgebildet werden kann.

14. Kocher nach einem der vorangehenden Ansprüche, wobei die Abdampfeinrichtung (60) des Weiteren ein Abdampf-Wärmetauschtell (63) enthält der mit dem Abdampfrohr (61) verbunden ist, um den über das Abdampfrohr (61) nach außen abgelassenen Dampf zu kohlen.

15. Kochvorrichtung nach einem der vorangehenden Ansprüche, wobei das Heizgehäuse (31) mit wenigstens einer Heizeinrichtung zum Heizen versehen ist.

16. Kochvorrichtung nach einem der vorangehenden Ansprüche, wobei eine Dampfabdeckung (45) zum Vertellen des durch die Einrichtung (50) zum Erzeugen von überhitztem Dampf zugeführten Dampfes im Inneren des Heizgehäuses (31) vorhanden ist.

17. Kochvorrichtung nach einem der vorangehenden Ansprüche, wobei wenigstens die Abdampfeinrichtung (60) oder die Abdampf-Umwälzeinrichtung (70) oder die Einrichtung (50) zum Erzeugen von überhitzten Dampf mit einem Filtermaterial zum Filtern des aus dem Heizgehäuse abgelassenen Dampfes versehen ist.

## Revendications

1. Cuiseur à vapeur surchauffée, comprenant :
- un cabine de cuisson comportant un boîtier de chauffage (31) formant dans celui-ci un espace de réception pour y recevoir des aliments ;
- un générateur de vapeur surchauffée (50) fonctionnant de manière à générer de la vapeur surchauffée que l'on envoie dans le boîtier de chauffage (31) ;
- un dispositif d'alimentation en eau (80) comprenant une partie d'injection d'eau (81) associée au cabinet de cuisson et à travers laquelle de l'eau peut être injectée, et un tuyau d'alimentation en eau (89) disposé entre la partie d'injection d'eau (81) et le générateur de vapeur surchauffée (50), lequel fonctionne de manière à envoyer l'eau injectée provenant de la partie d'injection d'eau (81) vers le générateur de vapeur surchauffée (50) ;
- un dispositif d'évacuation (60) comprenant un tuyau d'évacuation (61) pour évacuer la vapeur envoyée au boîtier de chauffage (31) ;
**caractérisé par** un dispositif de mise en circulation de l'évacuation (70) comprenant un tuyau de mise en circulation de l'évacuation (71) qui, lors du fonctionnement, va envoyer la vapeur évacuée vers le tuyau d'évacuation (61) jusqu'au générateur de vapeur surchauffée (50), ainsi qu'une partie de sélection de débit (73) disposée entre le tuyau d'évacuation (61) et le tuyau de mise en circulation de l'évacuation (71) afin d'évacuer la vapeur évacuée vers le tuyau d'évacuation (61) jusqu'à l'extérieur ou afin de la guider vers le tuyau de remise en circulation de l'évacuation (71), ceci de manière sélective.

2. Cuiseur selon la revendication 1, dans lequel la partie d'injection d'eau (81) comprend une partie ouverture d'injection d'eau (82) associée au cabinet de cuisson, une porte d'alimentation en eau (83) pour ouvrir et fermer la partie ouverture d'injection d'eau (82), et une partie de guidage d'eau (85) disposée au dos de la porte d'alimentation en eau (83) qui va guider l'eau injectée à travers la partie ouverture d'injection d'eau (82) jusqu'au tuyau d'alimentation en eau (89).

3. Cuiseur selon la revendication 1 ou 2, dans lequel le dispositif d'alimentation en eau (80) comprend en outre une bouteille d'eau (90) pour envoyer de l'eau vers la partie d'injection d'eau (81), laquelle bouteille d'eau (90) comprend un capuchon de bouteille d'eau (91) sur lequel est monté une ouverture, ainsi qu'une valve de fermeture (93) permettant d'envoyer ou de couper l'eau vers la partie d'injection d'eau (81).

4. Cuiseur selon la revendication 3, dans lequel la bouteille d'eau (90) a une capacité d'environ 500 ml.

5. Cuiseur selon l'une quelconque des revendications précédentes, dans lequel le dispositif d'alimentation en eau (80) comprend en outre une pompe d'alimentation en eau (87) pour envoyer l'eau injectée vers la partie d'injection d'eau (81) jusqu'au générateur de vapeur surchauffé (50).

6. Cuiseur selon l'une quelconque des revendications précédentes, dans lequel le générateur de vapeur surchauffée (50) comprend une première partie de chauffage (51a) pour chauffer l'eau fournie par le dispositif d'alimentation en eau (80) de manière à générer ainsi de la vapeur, et une seconde partie de chauffage (51b) pour chauffer la vapeur générée par la première partie de chauffage (51a) de manière à générer ainsi de la vapeur surchauffée.

7. Cuiseur selon la revendication 6, dans lequel la première partie de chauffage (51a) est disposée en dessous de la seconde partie de chauffage (51b), la première partie de chauffage (51a) et/ou la seconde partie de chauffage (51b) comprenant une unité de chauffage de type gaine.

8. Cuiseur selon la revendication 6 ou la revendication 7, dans lequel le générateur de vapeur surchauffée (50) comprend une enceinte interne de générateur (55) formant dans celui-ci un espace de réception pour recevoir la première partie de chauffage (51a) et la seconde partie de chauffage (51b), et une enceinte externe de générateur (57) disposée de manière espacée afin de former une couche d'isolation sous vide de générateur (56) entre elle et l'enceinte interne de générateur (55).

9. Cuiseur selon la revendication 7 ou la revendication 8, dans lequel au moins un élément de protection contre les rayonnements du générateur (59) est disposé dans la couche d'isolation sous vide de générateur (56) du générateur de vapeur surchauffée (50) de manière à empêcher ainsi que la chaleur transmise à l'enceinte interne du générateur (55) soit rayonnée vers l'enceinte externe du générateur (57).

10. Cuiseur selon la revendication 6 ou la revendication 7, dans lequel le boîtier de chauffage (31) comprend une enceinte interne (55) formant dans celui-ci un espace de réception dans lequel les aliments sont placés, une enceinte externe (57) disposée de manière espacée à l'extérieur de l'enceinte interne (55), et une couche d'isolation sous vide (56) entre l'enceinte interne (55) et l'enceinte externe (57).

11. Cuiseur selon la revendication 10, dans lequel au moins un élément de protection contre les rayonnements (59) est disposé dans la couche d'isolation sous vide (56) du boîtier de chauffage (31), de à manière à empêcher ainsi que la chaleur transmise à l'enceinte interne (55) soit rayonnée vers l'enceinte externe (57).

12. Cuiseur selon l'une quelconque des revendications précédentes, comprenant en outre :
- au moins un capteur (47) de température dans le boîtier afin de mesurer la température interne du boîtier de chauffage (31) et un capteur de température d'évacuation afin de mesurer la température interne du tuyau d'évacuation (61) ; et
- une partie de commande afin de commander au moins une des températures de la partie de sélection de débit (73) et du boîtier de chauffage (31) en fonction de la température détectée par le capteur de température dans le boîtier (47) et/ou le capteur de température d'évacuation.

13. Cuiseur selon l'une quelconque des revendications précédentes, dans lequel le tuyau d'évacuation (61) et le tuyau de mise en circulation de l'évacuation (71) comprennent chacun un tuyau externe à travers lequel passe la vapeur évacuée du boîtier de chauffage (31), ainsi qu'un tuyau externe disposé de manière espacée afin de pouvoir former une couche d'isolation sous vide de tuyau entre celui-ci et le tuyau interne.

14. Cuiseur selon l'une quelconque des revendications précédentes, dans lequel le dispositif d'évacuation (60) comprend en outre une partie d'échange de chaleur d'évacuation (63) connectée au tuyau d'évacuation (61) afin de refroidir la vapeur évacuée par le tuyau d'évacuation (61) vers l'extérieur.

15. Cuiseur selon l'une quelconque des revendications précédentes, dans lequel le boîtier de chauffage (31) comporte au moins une unité de chauffage pour le chauffage.

16. Cuiseur selon l'une quelconque des revendications précédentes, dans lequel un couvercle à vapeur (45) servant à disperser la vapeur fournie par le générateur de vapeur surchauffée (50) est disposé dans le boîtier de chauffage (31).

17. Cuiseur selon l'une quelconque des revendications précédentes, dans lequel le dispositif d'évacuation (60) et/ou le dispositif de mise en circulation de l'évacuation (70) ainsi que le générateur de vapeur surchauffe (50) comportent un matériau filtrant afin de filtrer la vapeur évacuée par le boîtier de chauffage.
